# EUROPEAN PATENT SPECIFICATION

(11) **EP 1 392 604 B1**
(45) Date of publication and mention of the grant of the patent: **25.12.2013**
(21) Application number: 02716576.0
(22) Date of filing: 03.04.2002
(51) Int. Cl.: C01G 23/07, C01B 13/30

(54) **PLASMA SYNTHESIS OF TITANIUM DIOXIDE NANOPOWDER AND POWDER DOPING AND SURFACE MODIFICATION PROCESS**
HERSTELLUNG IN PLASMA VON TITANIUMDIOXYD-NANOPULVER UND PULVERDOTIERUNG SOWIE MODIFIZIERUNGSVERFAHREN
SYNTHESE PAR PLASMA DE NANOPOUDRE DE DIOXYDE DE TITANE ET PROCESSUS DE MODIFICATION DE SURFACE ET DE DOPAGE DE POUDRE

(30) Priority: 24.04.2001 US 840854
(43) Date of publication of application: 03.03.2004
(73) Proprietor: Tekna Plasma Systems Inc., Sherbrooke, Quebec J1L 2T9 (CA)
(72) Inventor: BOULOS, Maher, I., Sherbrooke, Québec J1L 1H2 (CA); JUREWICZ, Jerzy, W., Sherbrooke, Quebec J1J 4B3 (CA); NESSIM, Christine, A., Abdel, Messih, Sherbrooke, Quebec JIL2B4 (CA)
(74) Representative: Beetz & Partner
(86) International application number: PCT/CA2002/000470
(87) International publication number: WO 2002/086179

(56) References cited:
- GB-A- 1 092 885
- US-A- 3 449 072
- US-A- 3 727 378
- US-A- 5 498 446
- DATABASE WPI Section Ch, Week 199339 Derwent Publications Ltd., London, GB; Class E37, AN 1993-308917 XP002211150 & JP 05 221615 A (SUMITOMO), 31 August 1993 (1993-08-31)
- DATABASE WPI Section Ch, Week 200028 Derwent Publications Ltd., London, GB; Class E35, AN 2000-318764 XP002211151 & CN 1 245 144 A (UNIV HUADONG), 23 February 2000 (2000-02-23)

## Description

### FIELD OF THE INVENTION

The present invention relates to a process and apparatus for the synthesis of metal-containing powders. In particular but not exclusively, the present invention relates to the synthesis of nanosized particles of Titanium Dioxide by the oxidation of Titanium Tetrachloride in the vapour phase via an electrically induced plasma followed by rapid cooling. The invention also offers a technique for the inline doping of the metal-containing powder for the purpose of modifying its crystalline structure and/or its surface properties.

### BACKGROUND OF THE INVENTION

Pigments that contribute light-scattering properties to coatings are generally known as white, or hiding, pigments. They act by scattering all wavelengths of light, owing to their relatively high refractive index, so that they are perceived as white to the human eye. The most widely used white pigment is Titanium Dioxide (TiO₂), a polymorphous substance that exists in three modifications or crystal structures, rutile, anatase or brookite. Only the anatase and rutile modifications are of any note, technically or commercially.

The high demand for Titanium Dioxide based pigments is driven by a combination of a high refractive index and a reasonable manufacturing cost. Additionally, Titanium Dioxide based pigment does not suffer from the same environmental considerations as earlier white pigments such as Lead carbonate, which had a high toxicity and were readily released into the environment when placed in contact with water.

The anatase form of Titanium Dioxide has a lower refractive index and is generally less durable than the rutile form, which makes it less desirable as a coating pigment. However, as will be seen below, both the lower refractive index and lower durability are highly desirable in some applications.

Although the most important use for Titanium Dioxide is as a pigment, the material is in fact colourless. To reveal its special properties, the Titanium Dioxide must first be processed to a preferred particle size. For example, for pigment applications the particle size would be one half the wavelength of visible light or about 0.3 microns.

Aside from its excellent properties as a pigment, Titanium Dioxide has dielectric properties, high ultraviolet absorption and high stability which allows it to be used in speciality applications, such as Electro-ceramics, glass and as an insulator.

Titanium dioxide pigments are used in man-made fibres, such as polyester, viscose and rayon to name a few. As man made fibres have an undesirable glossy and translucent appearance, the pigment is incorporated into the fibre during the spinning process as for brightening the fibre and reducing the fibre's lustre. For this application the anatase form is greatly preferred as it has a more neutral white tone than the rutile modification and is also less abrasive. This latter property is very important as the process for spinning fibres is very delicate and would be adversely affected by the addition of the rutile form of Titanium Dioxide to the fibres. Anatase, on the other hand, is a photo catalyst that is activated by ultraviolet radiation resulting in the rapid degradation of the man made fiber when exposed to sunlight.

Titanium Dioxide is also used for adding opacity and brightness to plastics. The opaqueness and high brightness help mask the poor natural colour of many plastics. Additionally, some grades of Titanium Dioxide absorb ultraviolet light which can accelerate the ageing of plastics.

Additionally, Titanium Dioxide is added as a filler to the pulp in paper manufacturing processes to enhance brightness and opaqueness. This allows, for example, for the production of highly opaque lightweight papers. For this application Titanium Dioxide in its anatase form is preferred.

In order to manufacture Titanium Dioxide, a source of Titanium is required. Although Titanium ranks ninth in abundance among elements found in the crust of the earth, it is never found in the pure state. Rather, it occurs as an oxide in the minerals ilmenite (FeTiO₃), rutile (TiO₂) or sphene (CaO-TiO₂-SiO₂).

The production of titanium dioxide pigments is a two step process. The first step is to purify the ore, and is basically a refinement step. This may be achieved by either the sulphate process, which uses sulphuric acid as a liberating agent or the chloride process, which uses chlorine as the liberating agent.

In the sulphate process, the titanium containing ore is dissolved in sulphuric acid, yielding a solution of titanium, iron, and other metal sulphates. Through a series of steps including chemical reduction, purification, precipitation, washing, and calcination, pigment size TiO₂ is produced.

Alternatively, the chloride process includes high-temperature, anhydrous vapour phase reactions. Titanium ore is reacted with chlorine gas under reducing conditions to obtain Titanium Tetrachloride (TiCl₄) and metallic chloride impurities, which are subsequently removed. Highly purified TiCl₄ is then oxidised at high temperature to produce intermediate TiO₂. The oxidation step in the chloride process permits control of particle size distribution and crystal type, making it possible to produce high quality pigment grade TiO₂.

The chloride process is inherently cleaner than the sulphate process and requires a smaller investment on behalf of the manufacturer in terms of waste treatment facilities. Additionally, Titanium Dioxide produced using the chlorine process is generally of higher purity, more durable and has a particle size distribution which is narrower, the latter improving brightness, gloss and opacity.

As stated above, the chloride process includes high-temperature anhydrous vapour phase reactions where liquid Titanium Tetrachloride is vaporised and superheated after which it is reacted with hot oxygen to produce Titanium Dioxide. The superheating and subsequent reaction phase can be carried out either by a refractory process, where the reactants are heated by refractory heat exchangers and combined. Alternatively, carbon monoxide can be purified and then mixed with the Titanium Tetrachloride and oxidising agent and then the mixture subject to a controlled combustion. Finally, the Titanium Tetrachloride can be vaporised in a hot plasma flame along with the oxidising agent. This final method has proven to be the most efficient.

A number of technical approaches are available for generating the plasma. The plasma may be generated by passing the working gas between a pair of electrodes whereby an arc discharge ionises the gas as passes between.

Alternatively, the working gas may be passed through a high frequency electrostatic field. Finally, the working gas may be passed through a high frequency induction coil whereby the electromagnetic field ionises the gas as it passes within the coil.

The synthesis of pigment grade Titanium Dioxide through the oxidation of Titanium Tetrachloride in a plasma flame formed by passing a working gas through a high frequency induction is well known in the art and has been used industrially for some time for the commercial production of such powders for the paint industry.

Traditionally, the product obtained in this case is composed of relatively large opaque particles with a particle size in the range of 0.2 to 2.0 micrometers or more. Such powders are used as a base material for the production of a wide range of paints and surface modification coatings.

A process for the synthesis of a metal oxide nanopowder from a metal compound vapour, which is oxidized in a plasma to produce a metal oxide vapour, the metal oxide being precipitated in a turbulent quench zone, is disclosed in US 3,449,072.

There has always been an interest in obtaining finer powders in the nanometer range for a wide variety of other applications including ultraviolet protection and the sunscreen industry as well as for advanced catalyst development. However, the development of a process to produce large quantities of Titanium Dioxide nanopowders has proved difficult to attain. The main obstacle has been the method to achieve such an important reduction in the size of distribution of the powder and control its chemistry and surface properties.

### SUMMARY OF THE INVENTION

The present invention addresses the above limitations by providing a process for the production of metal oxide nanopowders.

The invention is achieved as set out in the appended claims. Additional advantages and features of the present invention are claimed in the respective sub claims.

More specifically, in accordance with the present invention, there is provided a process for the synthesis of a metal oxide nanopowder from a metal compound vapour. This process comprises the steps of bringing the metal compound vapour to a reaction temperature, reacting the metal compound vapour at the reaction temperature with an oxidising gas to produce a metal oxide vapour, producing a highly turbulent gas quench zone, and producing the metal oxide nanopowder by cooling the metal oxide vapour in the quench zone.

Accordingly, the process of the invention enables the production of a metal oxide nanopowder with a controlled particle size distribution and surface reactivity.

Also in accordance with the present invention, there is provided a process for the synthesis of a metal oxide nanopowder from a metal chloride vapour. This process comprises the steps of bringing the metal chloride vapour to a reaction temperature, reacting the metal chloride vapour at said reaction temperature with an oxidising gas to produce a metal oxide vapour, producing a highly turbulent gas quench zone, and producing the metal oxide nanopowder by cooling the metal oxide vapour in the quench zone.

There is additionally provided the step of collecting the metal oxide nanopowder from the quench zone.

According to other preferred embodiments:
- the step of bringing the metal chloride vapour to a reaction temperature comprises producing a plasma and injecting metal chloride into the plasma in order to produce the metal chloride vapour at the reaction temperature;
- the step of injecting metal chloride in the plasma comprises axially or radially injecting the metal chloride into the centre of the plasma or the plasma tail flame; and
- the step of reacting the metal chloride vapour with an oxidising gas comprises injecting the oxidising gas into the plasma.

Additionally, in accordance with another preferred embodiment there is provided the step of mixing a doping agent with the metal chloride prior to injecting said metal chloride in the plasma.

In accordance with still another preferred embodiment, the step of reacting the metal chloride vapour with an oxidising gas further comprises injecting a doping agent into the plasma after the metal chloride has reacted with the oxidising gas.

In accordance with yet another preferred embodiment, there is provided the additional step of coating the metal oxide nanopowder with a doping agent.

In accordance with another preferred embodiment the step of producing a highly turbulent gas quench zone comprises injecting a quench gas in the plasma.

In accordance with the present invention, the step of injecting the quench gas into the plasma comprises producing jets of said quench gas in respective directions having both radial and tangential components, thereby producing a turbulent stream of quench gas.

Therefore the process of the invention advantageously provides for both the production of metal dioxide nanopowders and metal dioxide nanopowders which have been treated with a suitable doping agent.

Also in accordance with the present invention, there is provided a process for the synthesis of a TiO₂ nanopowder from a TiCl₄ vapour. Said process comprises the steps of bringing the TiCl₄ vapour to a reaction temperature, reacting the heated TiCl₄ vapour with oxygen to produce a TiO₂ vapour, producing a highly turbulent gas quench zone, and producing the TiO₂ nanopowder by cooling the TiO₂ vapour in the quench zone.

Accordingly, the process of the invention advantageously provides for the production of a TiO₂ nanopowder.

In accordance with a preferred embodiment the step of bringing the TiCl₄ vapour to a reaction temperature comprises producing a plasma and injecting the TiCl₄ into the plasma in order to produce the TiCl₄ vapour at the reaction temperature.

According to other preferred embodiments:
- there is provided the additional step of mixing a doping agent with the TiCl₄ prior to injecting said TiCl₄ in the plasma;
- there is provided the additional step of injecting a doping agent into the plasma after the TiCl₄ vapour has reacted with the oxygen; and
- there is provided the additional step of coating the TiO₂ nanopowder with a doping agent.

Additionally, in accordance a further preferred embodiment the step of producing a highly turbulent gas quench zone comprises injecting a quench gas in the plasma.

In accordance with the present invention, the step of injecting the quench gas in the plasma comprises producing jets of said quench gas in respective directions having both radial and tangential components to thereby produce a turbulent stream of quench gas.

Therefore the process of the invention advantageously provides for both the production of TiO₂ nanopowders and TiO₂ nanopowders which have been treated with a suitable doping or surface treatment agent.

Also in accordance with the present invention, there is provided a process for the inline synthesis of a doped metal oxide from a metal chloride vapour and a doping agent. This process includes the steps of bringing the metal chloride vapour to reaction temperature, reacting the metal chloride vapour with an oxidising gas to produce a metal oxide vapour, producing a highly turbulent intense product quench zone, producing metal oxide particles by cooling the metal oxide vapour in the quench zone and producing doped metal oxide by coating the metal oxide particles with the doping agent.

In accordance with a preferred embodiment the doping agent or surface treating is selected from one of two groups of materials. The first is comprised of, but not limited to, metals or volatile metal compounds such as silicon tetrachloride, zinc chloride or others. The second group is comprised of organic monomers such as Methyl Methylacrylate (MMA), Teflon or others such as Diethyl Zinc and chlorofluorocarbons.

Accordingly, the process of the invention advantageously provides for the production of a doped metal oxide powder whereby the doping of the metal oxide powder is carried out inline after the powder has been cooled.

Also in accordance with the present invention, there is provided a process for the for the inline synthesis of a doped TiO₂ from TiCl₄ and a doping agent. The process includes the steps of bringing the TiCl₄ to reaction temperature, reacting the heated TiCl₄ with oxygen to produce a TiO₂ vapour, producing a highly turbulent intense product quench zone, cooling the TiO₂ vapour in the quench zone to produce TiO₂ particles, and producing doped TiO₂ by coating the TiO₂ particles with the doping agent.

Accordingly, the process of the invention advantageously provides for the production of a doped TiO₂ powder whereby the doping of the TiO₂ powder is carried out inline after the powder has been cooled.

Also in accordance with the present invention, there is provided an apparatus for synthesising a metal oxide nanopowder from a metal compound vapour. The apparatus comprises the following elements:
- a plasma to bring the metal compound vapour to a reaction temperature;
- a reactor chamber within which the metal compound vapour reacts at the reaction temperature with an oxidising gas to produce a metal oxide vapour; and
- a means for producing a highly turbulent quench zone below the plasma in order to promote individual particle nucleation and hinder the metal oxide particle growth.

The quench zone cools the metal oxide vapour thus producing the metal oxide nanopowder. Additionally, the means for producing a highly turbulent quench zone comprises a plurality of substantially coplanar fine quench gas nozzles through which a quench gas is injected at high velocity.

In accordance with a preferred embodiment, the reactor chamber of the synthesising apparatus Is substantially cylindrical.

In accordance with another preferred embodiment, the fine quench gas nozzles which provide for the highly turbulent quench zone are equally spaced around the reactor chamber.

In accordance with the present invention, the fine quench gas nozzles which provide for the highly turbulent quench zone are oriented in respective directions having both radial and tangential components.

Accordingly, the apparatus of the invention advantageously provides for synthesising a metal oxide nanopowder from a metal compound vapour.

Also in accordance with the present invention, there is provided an apparatus for synthesising a doped metal oxide nanopowder from a metal compound vapour and a doping agent. The apparatus comprises the following elements:
- a plasma to bring the metal compound vapour and the doping agent to a reaction temperature;
- a reactor chamber in which the metal compound vapour and the doping agent react at the reaction temperature with an oxidising gas to produce a doped metal oxide; and
- a means for producing a highly turbulent quench zone below the plasma.

The quench zone cools the doped metal oxide vapour thus producing the doped metal oxide nanopowder. Furthermore, the means for producing a highly turbulent quench zone comprises a plurality of substantially coplanar fine quench gas nozzles through which a quench gas is injected at high velocity.

Finally, also in accordance with the present invention, there is provided an apparatus for the inline synthesis of a doped metal oxide from a metal compound vapour and a doping agent. This apparatus comprises the following elements:
- a plasma to bring the metal compound vapour to a reaction temperature;
- a reactor chamber in which the metal compound vapour and the doping agent react at the reaction temperature with an oxidising gas to produce a metal oxide vapour;

- a means for producing a highly turbulent quench zone below the plasma wherein the quench zone cools the metal oxide vapour producing metal oxide particles; and
- an inline doping unit for coating the metal oxide particles with the doping agent.

The means for producing a highly turbulent quench zone comprises a plurality of substantially coplanar fine quench gas nozzles through which a quench gas is injected at high velocity. Additionally, the doping unit comprises a source of the doping agent and a doping agent injecting inlet through which the doping agent is injected into the metal oxide particles thereby producing the doped metal oxide.

Accordingly, the apparatus of the invention also advantageously provides for synthesising a doped metal oxide powder from a metal compound vapour whereby the doping of the metal oxide powder is carried out inline after the powder has been cooled.

The foregoing and other objects, advantages and features of the present invention will become more apparent upon reading of the following non-restrictive description of a preferred embodiment thereof, given by way of example only with reference to the accompanying drawings.

### BRIEF DESCRIPTION OF THE DRAWINGS

In the appended drawings:
Figure 1 is a schematic elevation view of an apparatus in accordance with the present invention, for the production of a metal oxide nanopowder;
Figure 2 is a cross sectional view, taken along line 2-2 of Figure 1, of the apparatus in accordance with the present invention, for the production of a metal oxide nanopowder; and
Figure 3 is a graph illustrating the photocatalytic degradation of phenol in water in the presence of doped and non treated TiO₂ nanopowder.

### DETAILED DESCRIPTION OF THE PREFERRED EMBODIMENT

According to a preferred embodiment of the present invention, Titanium Dioxide nanopowder is manufactured by heating Titanium Tetrachloride to a reaction temperature using plasma, reacting the obtained Titanium Tetrachloride vapour with an oxidising gas to form Titanium Dioxide vapour and rapidly cooling the Titanium Dioxide vapour.

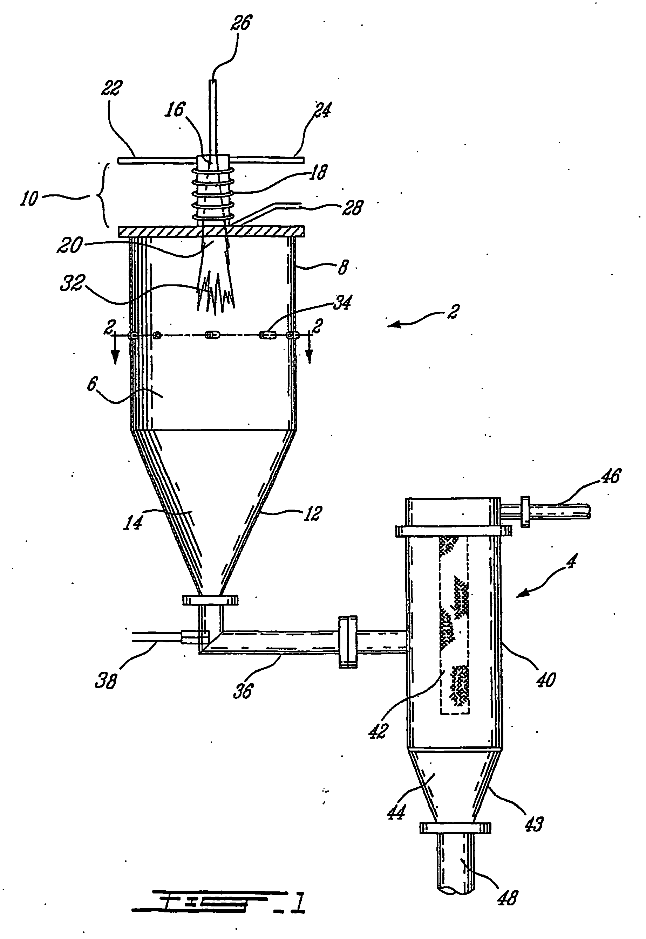

Referring now to the drawings, Figure 1 illustrates a reactor 2 and a filter unit 4. The reactor 2 includes a sealed reaction chamber 6 comprising a vertically disposed cylindrical chamber section 8 enclosed at the upper end by an induction plasma jet assembly 10. The sealed reaction chamber 6 also comprises a conical chamber section 12 at the lower end of the vertically disposed cylindrical section 8. This conical chamber section 12 defines a region 14 for receiving Titanium Dioxide nanopowder.

The plasma jet assembly 10 comprises a cylindrical reactant mixing chamber 16 and an inductive coil 18 coaxial with and surrounding the mixing chamber 16. The plasma 20 used to heat the Titanium Tetrachloride is produced by the plasma jet assembly 10 by passing a gas, referred to in the art as a working gas, through a high frequency, for example RF frequency electromagnetic field. This electromagnetic field should have a power level sufficient high to cause, by induction, the gas to ionise and thereby produce and sustain plasma. The working gas could be any gas which will ionise when subject to the high frequency electromagnetic field and which remains inert when in the presence of Titanium Tetrachloride. Examples of suitable working gases include helium, argon, carbon monoxide, oxygen, and air or a mixture thereof. By supplying a high frequency electric current to the inductive coil 18 the mixture of gases in the reactant mixing chamber 16 is ionised and a plasma created.

In the preferred embodiment, the working gas is formed of a mixture of Oxygen and Argon (with Oxygen also acting as the oxidising agent). Oxygen is introduced into the reactant mixing chamber 16 via a first inlet 22 and Argon via a second inlet 24. A high frequency electric current is applied to the inductive coil 18; the power level of this electric current is sufficiently high to ionise the Oxygen/Argon mixture and create the plasma 20. The minimum power level applied to the inductive coil 18 necessary for self sustained induction plasma discharge is determined by the gas, pressure and frequency of the magnetic field. The minimum power necessary for sustaining an induction plasma discharge may be lowered by reducing the pressure or by adding ionising mixtures. Power can vary from 20 to 30 kW all the way up to hundreds of kilowatts depending on the scale of operation. Preferably, the frequency of the current supplied to the inductor coil 18 is of the order of 3 Mhz, although successful operation can be demonstrated at typical frequencies as low as 200 kHz or as high as 26.7 MHz. It should also be apparent to a person of ordinary skill in the art that frequencies outside the range of 200 kHz to 26.7 MHz may be used. In the preferred embodiment a sinusoidal 30kW electrical current of 3MHz is applied to the inductive coil 18 whereby the oxygen/argon mixture in the reactant mixing chamber 16 is ionised to create the induction plasma 20.

Titanium Tetrachloride is introduced axially into the reactant mixing chamber 16 via a third inlet 26. In an alternative embodiment the Titanium Tetrachloride is introduced radially into the plasma 20 immediately below the reactant mixing chamber 16 via a fourth inlet 28. In a second alternative embodiment a combination of axial introduction of Titanium Tetrachloride via the third inlet 26 and radial introduction of Titanium Tetrachloride via the fourth inlet 28 is used.

Additionally, a doping agent can be reacted with the oxidising gas to modify the bulk and/or surface properties of the nanopowders produced. In a first alternative embodiment the doping agent is mixed with the Titanium Tetrachloride prior to the Titanium Tetrachloride being brought to the reaction temperature by the plasma 20. Bringing the mixture to reaction temperature causes both the Titanium Tetrachloride and the doping agent to simultaneously under go oxidisation thus modifying the bulk properties of the Titanium Dioxide formed, its surface properties, or both.

In a second alternative embodiment, the doping agent is injected into the plasma 20 after the Titanium Tetrachloride has reacted with the oxidising gas and the Titanium Dioxide formed. Similar to the first alternative embodiment described above, provided the doping agent is vaporised at the reaction temperature, the doping agent will react with the oxidising gas, modifying the bulk properties of the Titanium Dioxide, its surface properties, or both.

Doping agents introduced into the process at this stage include volatile metal compounds, such as Silicon Tetrachloride and Zinc Chloride.

It should be noted that once the plasma 20 has been established it may be sustained solely by the flow of Titanium Tetrachloride. Indeed, the plasma 20 may be initiated and established by the flow of Titanium Tetrachloride alone. Also, by mixing a readily ionised working gas such as argon with the Titanium Tetrachloride, ignition of the plasma is greatly simplified.

As the Titanium Tetrachloride comes into contact with the plasma 20 it vaporises and the oxidation reaction proceeds almost instantaneously giving rise to the formation of Titanium Dioxide and free chlorine. The reaction is estimated as taking place at a temperature between 1500°C and 3000°C although it should be apparent to one of ordinary skill in the art that lower or higher temperatures can also be used depending on plasma loading and input power to the inductor coil 18.

A critical part of the process is the high intensity turbulent quench technique which has been developed for the ultra rapid cooling of the products of the reaction and the hindrance of the particle growth process normally associated with the formation of aerosol particles through vapour condensation. The rapid quench technique is responsible for the formation of the nanopowder and the predominance (experimental results reveal over 80%) of the anatase phase in this powder. The quench technique aims to bring the temperature of the Titanium Dioxide vapours down from the reaction temperature of between 1500°C to 3000°C to a temperature in the range of 100°C and 500°C. Experimental tests carried out using an apparatus in accordance with the preferred embodiment yielded cooled temperatures of approximately 120°C.

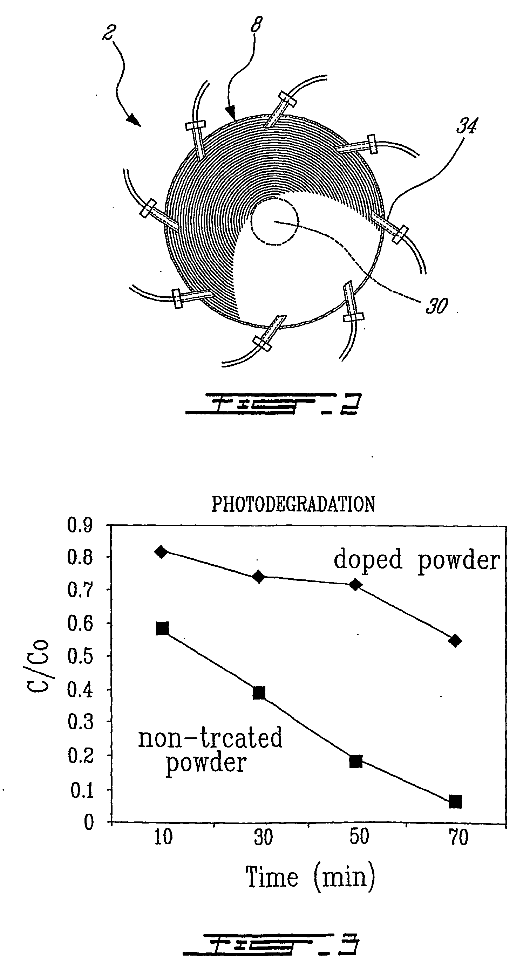

Referring now to Figure 2 in addition to Figure 1, a highly turbulent gas quench zone 30 is produced by injecting an intense turbulent stream of compressed quench gas into the plasma discharge 32. This is made via coplanar fine quench gas nozzles such as 34 oriented in respective directions having both radial and tangential components to produce respective high speed jets of quench gas in the same radial/tangential direction. As better shown in Figure 2, the nozzles 34 are equally spaced apart from each other around the periphery of the reactor 2. This results in rapid cooling of the product vapour and the immediate halting of the particle growth process. The highly turbulent quench zone 30 is largely responsible for the control achieved by this process on the particle size distribution and the nanosized mean particle diameter of the Titanium Dioxide powder obtained.

The quench technique used in the preferred embodiment is comprised of a circular air channel which is located below the plasma discharge 32 in the reactor 2. The location of the quench zone 30, depending on the process requirement, may vary between a few centimetres to more than 15 or 20 centimetres downstream of the plasma discharge 32. Although air is used as a quench gas in the preferred embodiment in accordance with the present invention, it should be apparent to one of ordinary skill in the art that selection of the quench gas is dictated to some degree by the chemistry of the process, and that other gases such as for example pure oxygen and nitrogen may also be used as a quench gas.

The quench gas is injected into the reactor 2 with a velocity on the order of several hundred meters per second up to sonic velocity. In the preferred embodiment the velocity of the injected quench gas is 260 metres per second. The injected quench gas results in the formation of a high intensity turbulent flow zone 30 in the centre the vertically disposed cylindrical section 8 of the reaction chamber 6 of the reactor 2 at the level of the quench gas nozzles 34. The formation of this flow zone 30 gives rise to the rapid cooling of the products of the reaction and their condensation in the form of a nanometer sized aerosol particles. The rapid cooling of the products of the reaction also favours the formation of the TiO₂ nanopowder in the anatase phase which is the predominant phase formed at high temperature.

The direction of the quench gas nozzles 34 can be adjusted in the plane in which these nozzles 34 are lying in order to control the turbulence characteristics in the centre of the quench zone 30 which, in turn, has an influence on the nature of the nanopowders obtained.

A conduit 36 interposed between the reactor 2 and the filter unit 4 is affixed at the lower, smaller-diameter end of the conical section 12 of the reaction chamber 6 of the reactor 2, and is used for transporting the cooled nanopowder to the filter unit 4 for filtering. A fifth inlet 38 is located in the wall of the conduit 36. A suitable doping agent may possibly be introduced through this fifth inlet 38 for coating the cooled nanopowder. By coating the powder, properties of the powder can be modified to adapt them to particular applications. For example, as stated above the process produces TiO₂ with a proportionally higher content of the anatase phase. Adding the anatase phase to man made fibres combined with exposure to ultraviolet radiation can lead to auto-degradation of the fibres (due to the catalytic behaviour of the anatase phase when in the presence of ultraviolet radiation). By first coating the powder with the polymer Methyl Methylacrylate, prior to its addition to man made fibres, the auto degradation can be effectively halted thereby extending the life of the fibres.

A critical aspect of the coating process is the temperature of the powder to be coated. Traditionally, TiO₂ powders are left to cool for some time before an additional and separate coating process is applied to modify the surface characteristics of the powder. The rapid cooling of the powder provided by the highly turbulent gas quench technique means that the powder can be coated immediately following quenching with a range of materials which would other wise be destroyed or negatively effected by the heat of the powder. Additionally, for a number of coatings an accurate control of the cooled temperature is necessary, especially polymers if polymerisation is to take effect. Experiments have revealed, for example, that the coating of a TiO₂ powder with the polymer Methyl Methylacrylate can be carried out at a temperature of 120°C, a temperature which can be readily achieved and controlled through the use of the highly turbulent gas quench technique.

This coating of the nanopowder after cooling by the quench zone is herein referred to as inline doping. Although in this regard reference is made to the coating of a cooled nanopowder, it should be evident to one of ordinary skill in the art that the inline coating process could also be applied to a powder with a particle size larger than a nanopowder.

Depending on the intended use of the nanopowder (or powder, in the case a powder with a particle size greater than a nanopowder is being coated), many surface coating agents may be considered. The surface coating agent controls the surface properties of the nanopowder. For example, as stated above, the use of Methyl Methylacrylate as surface coating agent resulted in a significant reduction of the catalytic properties of the predominantly anatase TiO₂ nanopowder produced. Referring to Figure 3 the photocatalytic degradation of a normalised concentration phenol in water in the presence of a TiO₂ nanopowder doped with Methyl Methylacrylate ("doped powder") is displayed versus that of a non-treated powder. The process is not limited, however, to one specific surface coating agent. Other potential surface coating agents are known to those of ordinary skill in the art and may include, for example, Teflon monomer, Diethyl Zinc, chlorofluorocarbons and metallic vapours.

The filter unit 4 is comprised of an upper, vertically disposed cylindrical section 40. A conical section 43 is mounted on the lower end of the cylindrical section 40 and defines a region 44 for receiving filtered Titanium Dioxide nanopowder. A porous filter medium 42, such as Goretex™, capable of capturing the nanopowder is mounted axially and centrally within the cylindrical section 40 and has a porosity such that the nanopowders cannot pass there through and are removed from the exhaust gases which are expelled via the exhaust 46. The nanopowder received in the region 44 are collected through a bottom vertical conduit 48.

Although the present invention has been described hereinabove by way of a preferred embodiment thereof, this embodiment can be modified at will, within the scope of the appended claims, without departing from the spirit and nature of the subject invention.

## Claims

1. Process for the plasma synthesis of metal oxide nanopowders from a metal compound vapour in a reactor (2), comprising:
- bringing the metal compound vapour in a plasma (20) to a reaction temperature,
- reacting the metal compound vapour at the reaction temperature with an oxidising gas in the plasma (20) to produce metal oxide vapour,
- quenching the metal oxide vapour in a turbulent gas quench zone (30) by injecting a quench gas into the plasma discharge (32) or below the plasma discharge (32) in a quench zone (30), and
- collecting the metal oxide nanopowder from the quench zone (30),
**characterised in that**
the quench gas is injected into the quench zone (30) from nozzles (34) arranged around the periphery of the reactor (2) producing jets of quench gas in directions having both radial and tangential components.

2. Process according to claim 1, **characterised in that** the metal compound is a metal chloride.

3. Process according to claim 2, **characterised in that** the metal chloride is TiCl₄.

4. Process according to claim 2 or 3, **characterised in that** the metal chloride is axially injected into the centre of the plasma (20) or the plasma tail flame.

5. Process according to claim 2 or 3, **characterised in that** the metal chloride is radially injected into the centre of the plasma (20) or the plasma tail flame.

6. Process according to any of claims 1 to 5, **characterised in that** the oxidising gas is injected into the plasma (20).

7. Process according to any of claims 2 to 6, **characterised in that** a doping agent is mixed with the metal compound prior to injecting the metal compound into the plasma (20).

8. Process according to any of claims 2 to 6, **characterised in that** a doping agent is injected into the plasma after the metal compound has reacted with the oxidising gas.

9. Process according to any of claims 2 to 6, **characterised in that** the metal oxide nanopowder is coated with a doping agent or a surface treatment agent.

10. Process according to any of claims 7 to 9 in dependence on claim 2, **characterised in that** the doping agent or the surface treatment agent is selected from volatile metal compounds, such as silicon tetrachloride and zinc chloride, organic monomers such as methyl methacrylate (MMA) and tetrafluoroethylene (Teflon^{®}-monomer), diethylzinc and chlorofluorocarbons.

11. Process according to any of claims 3 to 10, **characterised in that** a readily ionised gas such as argon is used as working gas for the plasma (20).

12. Process according to any of claims 3 to 11, **characterised in that** air, pure oxygen or nitrogen are used as quench gas.

13. Process according to any of claims 3 to 12, **characterised in that** the quench gas is injected into the quench zone (30) with a velocity of several hundred meter per second up to sonic velocity.

14. Process according to any of claims 3 to 13, **characterised in that** the plasma oxidation of TiCl₄ is carried out at a temperature of 1500 to 3000 °C.

15. Apparatus for the plasma synthesis of metal oxide nanopowders from a metal compound vapour through plasma oxidation, comprising
- a reactor (2) comprising a sealed reaction chamber (6) comprising a vertically disposed chamber section (8) closed at the upper end by an induction plasma jet assembly (10), and a quench zone (30),
the plasma jet assembly (10) being provided for generating a plasma in the reaction chamber (6) to bring the metal compound vapour to a reaction temperature and comprising means (22, 24, 26, 28) for introducing a working gas, an oxidising gas and the metal compound,
- means (34) for injecting a quench gas into the quench zone (30) providing a turbulent quench gas for quenching the metal oxide vapour, and
- means (12, 14, 4) for collecting the metal oxide nanopowder,
**characterised in that**
the means (34) for injecting quench gas into the quench zone (30) are a plurality of fine quench gas nozzles (34) provided around the periphery of the reactor (2) and oriented in respective directions having both radial and tangential components.

16. Apparatus according to claim 15, **characterised in that** the reaction chamber (6) of the reactor (2) is substantially cylindrical, and the fine quench nozzles (34) are equally spaced around the reactor chamber (6).

17. Apparatus according to claim 15 or 16, **characterised in that** it comprises means (26; 28; 38) for introducing a doping agent into the plasma (20).

18. Apparatus according to claim 15 or 16, **characterised in that** it comprises an inline unit (38, 36) for introducing a doping agent or a surface treatment agent for coating the cooled metal oxide nanopowder.

## Patentansprüche

1. Verfahren zur Plasmasynthese von Metalloxidnanopulver ausgehend von einer Metallverbindung in der Dampfphase in einem Reaktor (2), das die folgenden Schritte aufweist:
- der Metallverbindungsdampf wird in einem Plasma (20) auf Reaktionstemperatur gebracht,
- der Metallverbindungsdampf wird bei Reaktionstemperatur in dem Plasma (20) mit einem oxidierenden Gas umgesetzt, um einen Metalloxiddampf zu bilden,
- der Metalloxiddampf wird in einer Quenchzone (30) mit turbulentem Gas abgeschreckt, indem ein Quenchgas in die Plasmaentladung (32) oder unterhalb der Plasmaentladung (32) in eine Quenchzone (30) eingebracht wird, und
- das Metalloxidnanopulver wird aus der Quenchzone (30) entnommen,
**dadurch gekennzeichnet, dass**
das Quenchgas in die Quenchzone (30) aus am Umfang des Reaktors (2) angeordneten Düsen (34) eingespeist wird, die Strahlen des Quenchgases erzeugen, die sowohl radiale als auch tangentiale Komponenten haben.

2. Verfahren nach Anspruch 1, **dadurch gekennzeichnet, dass** die Metallverbindung ein Metallchlorid ist.

3. Verfahren nach Anspruch 2, **dadurch gekennzeichnet, dass** es sich bei der Metallverbindung um TiCl₄ handelt.

4. Verfahren nach Anspruch 2 oder 3, **dadurch gekennzeichnet, dass** das Metallchlorid axial in das Zentrum des Plasmas (20) oder in den Schweif der Plasmaflamme eingebracht wird.

5. Verfahren nach Anspruch 2 oder 3, **dadurch gekennzeichnet, dass** das Metallchlorid radial in das Zentrum des Plasmas (20) oder in den Schweif der Plasmaflamme eingebracht wird.

6. Verfahren nach einem der Ansprüche 1 bis 5, **dadurch gekennzeichnet, dass** das oxidierende Gas in das Plasma (20) eingebracht wird.

7. Verfahren nach einem der Ansprüche 2 bis 6, **dadurch gekennzeichnet, dass** ein Dotierstoff mit der Metallverbindung vermischt wird, bevor die Metallverbindung in das Plasma (20) eingebracht wird.

8. Verfahren nach einem der Ansprüche 2 bis 6, **dadurch gekennzeichnet, dass** ein Dotierstoff in das Plasma eingebracht wird, nachdem die Metallverbindung mit dem oxidierenden Gas reagiert hat.

9. Verfahren nach einem der Ansprüche 2 bis 6, **dadurch gekennzeichnet, dass** das Metalloxidnanopulver mit einem Dotierstoff oder einem Oberflächenbehandlungsmittel beschichtet wird.

10. Verfahren nach einem der Ansprüche 7 bis 9, soweit abhängig von Anspruch 2, **dadurch gekennzeichnet, dass** der Dotierstoff oder das Oberflächenbehandlungsmittel unter flüchtigen Metallverbindungen wie Siliciumtetrachlorid und Zinkchlorid, organischen Monomeren wie Methylmethacrylat (MMA) und Tetrafluorethylen (Teflon®-Monomer), Diethylzink und Chlorfluorkohlenstoffen ausgewählt sind.

11. Verfahren nach einem der Ansprüche 3 bis 10, **dadurch gekennzeichnet, dass** ein bereits ionisiertes Gas wie Argon als Arbeitsgas verwendet wird.

12. Verfahren nach einem der Ansprüche 3 bis 11, **dadurch gekennzeichnet, dass** Luft, reiner Sauerstoff oder Stickstoff als Quenchgas verwendet werden.

13. Verfahren nach einem der Ansprüche 3 bis 12, **dadurch gekennzeichnet, dass** das Quenchgas in die Quenchzone (30) mit einer Geschwindigkeit von mehreren Hundert Metern pro Sekunde bis hinauf zu Schallgeschwindigkeit eingebracht wird.

14. Verfahren nach einem der Ansprüche 3 bis 13, **dadurch gekennzeichnet, dass** die Plasmaoxidation von TiCl₄ bei einer Temperatur von 1500 bis 3000°C durchgeführt wird.

15. Vorrichtung für die Plasmasynthese von Metalloxidnanopulver ausgehend von einer Metallverbindung in der Dampfphase mittels Plasmaoxidation, die aufweist:
- einen Reaktor (2), der eine dichte Reaktionskammer (6) umfasst, die einen vertikal angeordneten Kammerabschnitt (8), der am oberen Ende durch eine Induktionsplasmastrahleinheit (10) verschlossen wird, sowie eine Quenchzone (30) auf weist,
wobei die Induktionsplasmastrahleinheit (10) zum Erzeugen eines Plasmas in der Reaktionskammer (6) vorgesehen ist, um den Metallverbindungsdampf auf Reaktionstemperatur zu bringen, und Einrichtungen (22, 24, 26, 28) zum Einbringen eines Arbeitsgases, eines oxidierenden Gases und der Metallverbindung aufweist,
- eine Einrichtung (34) zum Einbringen eines Quenchgases in die Quenchzone (30), um ein turbulentes Quenchgas zum Abschrecken des Metalloxidpulvers bereitzustellen, und
- eine Einrichtung (12, 14, 4) zum Sammeln des Metalloxidnanopulvers,
**dadurch gekennzeichnet, dass**
es sich bei der Einrichtung (34) zum Einbringen eines Quenchgases in die Quenchzone (30) um mehrere feine Quenchgasdüsen (34) handelt, die am Umfang des Reaktors (2) angeordnet sind und jeweils so ausgerichtet sind, dass sie sowohl radiale als auch tangentiale Komponenten besitzen.

16. Vorrichtung nach Anspruch 15, **dadurch gekennzeichnet, dass** die Reaktionskammer (6) des Reaktors (2) in etwa zylindrisch ist und die feinen Quenchgasdüsen (34) gleichmäßig beabstandet um die Reaktionskammer angeordnet sind.

17. Vorrichtung nach Anspruch 15 oder 16, **dadurch gekennzeichnet, dass** sie eine Einrichtung (26, 28, 38) zum Einbringen eines Dotierstoffes in das Plasma (20) aufweist.

18. Vorrichtung nach Anspruch 15 oder 16, **dadurch gekennzeichnet, dass** sie eine Inline-Einheit (38, 36) zum Einbringen eines Dotierstoffes oder eines Oberflächenbehandlungsmittels zur Beschichtung des abgekühlten Metalloxidnanopulvers aufweist.

## Revendications

1. Procédé de synthèse au plasma de nanopoudres d'oxyde métallique provenant d'une vapeur de composé métallique dans un réacteur (2), comprenant les étapes consistant à :
- amener la vapeur de composé métallique dans un plasma (20) à une température de réaction,
- faire réagir la vapeur de composé métallique à la température de réaction avec un gaz oxydant dans le plasma (20) pour produire la vapeur d'oxyde métallique,
- tremper la vapeur d'oxyde métallique dans une zone de trempe à gaz turbulent (30) en injectant un gaz de trempe dans la décharge de plasma (32) ou en dessous de la décharge de plasma (32) dans une zone de trempe (30), et
- recueillir la nanopoudre d'oxyde métallique provenant de la zone de trempe (30),
**caractérisé en ce que**
le gaz de trempe est injecté dans la zone de trempe (30) par des buses (34) agencées autour de la périphérie du réacteur (2) produisant des jets de gaz de trempe dans des directions ayant des composants à la fois radiaux et tangentiels.

2. Procédé selon la revendication 1, **caractérisé en ce que** le composé métallique est un chlorure métallique.

3. Procédé selon la revendication 2, **caractérisé en ce que** le chlorure métallique est TiCl₄.

4. Procédé selon la revendication 2 ou 3, **caractérisé en ce que** le chlorure métallique est injecté axialement au centre du plasma (20) ou dans la flamme arrière de plasma.

5. Procédé selon la revendication 2 ou 3, **caractérisé en ce que** le chlorure métallique est injecté radialement au centre du plasma (20) ou dans une flamme arrière de plasma.

6. Procédé selon l'une quelconque des revendications 1 à 5, **caractérisé en ce que** le gaz oxydant est injecté dans le plasma (20).

7. Procédé selon l'une quelconque des revendications 2 à 6, **caractérisé en ce qu'**un agent dopant est mélangé au composé métallique avant injection du composé métallique dans le plasma (20).

8. Procédé selon l'une quelconque des revendications 2 à 6, **caractérisé en ce qu'**un agent dopant est injecté dans le plasma après que le composé métallique a réagi avec le gaz oxydant.

9. Procédé selon l'une quelconque des revendications 2 à 6, **caractérisé en ce que** la nanopoudre d'oxyde métallique est revêtue d'un agent dopant ou d'un agent de traitement de surface.

10. Procédé selon l'une quelconque des revendications 7 à 9 dépendant de la revendication 2, **caractérisé en ce que** l'agent dopant ou l'agent de traitement de surface est choisi parmi des composés métalliques volatils, tels que le tétrachlorure de silicium et le chlorure de zinc, des monomères organiques tels que le méthacrylate de méthyle (MMA) et le tétrafluoroéthylène (monomère Teflon®), le diéthylzinc et des chlorofluorocarbures.

11. Procédé selon l'une quelconque des revendications 3 à 10, **caractérisé en ce qu'**un gaz rapidement ionisé tel que l'argon est utilisé comme gaz de travail pour le plasma (20).

12. Procédé selon l'une quelconque des revendications 3 à 11, **caractérisé en ce que** l'air, l'oxygène pur ou l'azote sont utilisés comme gaz de trempe.

13. Procédé selon l'une quelconque des revendications 3 à 12, **caractérisé en ce que** le gaz de trempe est injecté dans la zone de trempe (30) à une vitesse de plusieurs centaines de mètre par seconde jusqu'à la vitesse sonique.

14. Procédé selon l'une quelconque des revendications 3 à 13, **caractérisé en ce que** l'oxydation au plasma de TiCl₄ est réalisée à une température de 1 500 à 3 000 °C.

15. Appareil de synthèse au plasma de nanopoudres d'oxyde métallique provenant d'une vapeur de composé métallique par oxydation au plasma, comprenant :
- un réacteur (2) comprenant une chambre de réaction étanche (6) comprenant une section de chambre disposée verticalement (8) fermée à l'extrémité supérieure par un ensemble de jet de plasma à induction (10), et une zone de trempe (30),
l'ensemble de jet de plasma (10) étant prévu pour générer un plasma dans la chambre de réaction (6) pour amener la vapeur de composé métallique à une température de réaction et comprenant des moyens (22, 24, 26, 28) pour introduire un gaz de travail, un gaz oxydant et le composé métallique,
- des moyens (34) pour injecter un gaz de trempe dans la zone de trempe (30) fournissant un gaz de trempe turbulent pour tremper la vapeur d'oxyde métallique, et
- des moyens (12, 14, 4) pour recueillir la nanopoudre d'oxyde métallique,
**caractérisé en ce que**
les moyens (34) pour injecter un gaz de trempe dans la zone de trempe (30) sont une pluralité de fines buses de gaz de trempe (34) disposées autour de la périphérie du réacteur (2) et orientées dans des directions respectives ayant à la fois des composants radiaux et tangentiels.

16. Appareil selon la revendication 15, **caractérisé en ce que** la chambre de réaction (6) du réacteur (2) est sensiblement cylindrique, et les fines buses de trempe (34) sont espacées de façon égale autour de la chambre de réacteur (6).

17. Appareil selon la revendication 15 ou 16, **caractérisé en ce qu'**il comprend des moyens (26 ; 28 ; 38) pour introduire un agent dopant dans le plasma (20).

18. Appareil selon la revendication 15 ou 16, **caractérisé en ce qu'**il comprend une unité en ligne (38, 36) pour introduire un agent dopant ou un agent de traitement de surface pour revêtir la nanopoudre d'oxyde métallique refroidie.
